# EUROPÄISCHE PATENTSCHRIFT

(11) **EP 3 102 447 B1**
(45) Veröffentlichungstag und Bekanntmachung des Hinweises auf die Patenterteilung: **21.02.2018**
(21) Anmeldenummer: 14827731.2
(22) Anmeldetag: 11.12.2014
(51) Int. Cl.: B60H 1/00, G01C 21/34, G05D 1/02, G08G 1/14, G08G 1/16

(54) **VERFAHREN ZUM AUTOMATISCHEN PARKEN EINES FAHRZEUGS UND ZUGEHÖRIGE STEUERUNGSEINRICHTUNG**
METHOD FOR AUTOMATICALLY PARKING A VEHICLE AND ASSOCIATED CONTROL DEVICE
PROCÉDÉ DE STATIONNEMENT AUTOMATIQUE D'UN VÉHICULE ET ÉQUIPEMENT DE COMMANDE CORRESPONDANT

(30) Priorität: 05.02.2014 DE 102014001554
(43) Veröffentlichungstag der Anmeldung: 14.12.2016
(73) Patentinhaber: Audi AG, 85045 Ingolstadt (DE)
(72) Erfinder: LORENZ, Stephan, 80939 München (DE)
(86) Internationale Anmeldenummer: PCT/EP2014/003310
(87) Internationale Veröffentlichungsnummer: WO 2015/117633

(56) Entgegenhaltungen:
- EP-A1- 1 775 690
- DE-A1-102008 027 692
- DE-A1-102009 027 543
- US-A1- 2005 103 876

## Beschreibung

Die Erfindung betrifft ein Verfahren zum automatischen Parken eines Fahrzeugs auf einer eine Vielzahl von Parkplätzen aufweisenden Parkfläche, mit den folgenden Schritten: Zuweisen eines bestimmten Parkplatzes für das Kraftfahrzeug durch die Steuerungseinrichtung und automatisches oder von der Steuerungseinrichtung gesteuertes Fahren des Fahrzeugs zu dem bestimmten Parkplatz.

Es sind bereits Steuerungseinrichtungen vorgeschlagen worden, die ein automatisches Parken auf Parkflächen eines Parkplatzes oder eines Parkhauses ermöglichen. Jedem Fahrzeug wird dabei von der Steuerungseinrichtung, die als zentrale Leitstelle dient, ein bestimmter Parkplatz (Parkslot) zugewiesen, zu dem es dann automatisch fahrerlos gefahren wird. Alternativ kann das Fahrzeug auch durch den Fahrer zu dem bestimmten Parkplatz gefahren und dort geparkt werden. Zur Abholung des Fahrzeugs fordert der Benutzer das Fahrzeug wieder an, daraufhin wird es automatisch bis zu einer Übergabestelle gefahren.

Das Dokument KR 10 2010 013 575 A beschreibt ein Parkassistenzsystem, das Umweltinformationen wie die Sonneneinstrahlung sowie die Temperatur innerhalb und außerhalb eines Fahrzeugs bei der Auswahl eines Parkplatzes bei der Navigation zu diesem Parkplatz und zur automatischen Steuerung einer Lüftung des Fahrzeugs verwendet.

Aus der US 2013 / 0231 824 A1 ist ein Verfahren zum automatischen Parken eines Fahrzeugs bekannt, bei dem der Fahrer das Fahrzeug verlassen kann, woraufhin ein autonomer Parkvorgang durchgeführt wird. Zu einem späteren Zeitpunkt kann das Fahrzeug an einem vorgegebenen Ort wieder abgeholt werden, wobei auch ein Abholzeitpunkt vorgegeben werden kann.
Aus der DE 10 2008 027 692 A1 ist ein Verfahren zur Unterstützung eines Fahrers eines Fahrzeugs bei einem Parkvorgang bekannt. Dabei sucht das Fahrzeug, nachdem der Fahrer es verlassen hat, selbständig eine geeignete Abstellfläche und parkt dort. Wenn der Fahrer das Fahrzeug wieder benötigt, parkt es selbständig aus und fährt bis zu einer Übergabestelle. Das Fahrzeug ist dazu mit Umfeldsensoren, beispielsweise Ultraschallsensoren, Radarsensoren oder optischen Sensoren versehen, die den Nahbereich um das Fahrzeug mit hoher Genauigkeit erfassen können. Zur Navigation kann ein Fahrzeug mit einem Satellitennavigationssystem ausgerüstet sein. Der nächstliegende Stand der Technik ist in der DE 10 2008 027 692 A1 zu sehen. Obwohl mit derartigen automatischen Parksystemen bereits eine beträchtliche Steigerung des Komforts für den Benutzer erzielt werden kann, da das mitunter lästige und langwierige Suchen eines geeigneten Parkplatzes entfällt, sind Situationen denkbar, in denen sich ein gewählter Parkplatz als suboptimal erweist. Ein Beispiel dafür ist ein Parkplatz, der zum Zeitpunkt des Abstellens des Fahrzeugs im Schatten liegt, im Laufe des Tages kann der Fall eintreten, dass das Fahrzeug von der prallen Sonne beschienen wird, wodurch es zu einer starken Aufheizung des Fahrzeuginnenraums kommt. Wenn der Benutzer das Fahrzeug zu diesem Zeitpunkt abholt, kann es aufgrund des stark aufgeheizten Innenraums an heißen Tagen praktisch unmöglich sein, das überhitzte Fahrzeug zu benutzen. Eine Temperierung mittels der Klimaanlage dauert eine gewisse Zeit, zudem wird dafür sehr viel Energie benötigt.
Es sind auch Situationen denkbar, bei denen eine Beschädigung des Fahrzeugs durch Unwetter droht, beispielsweise durch Hagel. Wenn einem Fahrzeug in dieser Situation ein nicht überdachter Parkplatz zugewiesen worden ist, erfolgt zwangsläufig eine Beschädigung, wenn der Benutzer das Fahrzeug nicht rechtzeitig abholt.

Der Erfindung liegt daher die Aufgabe zugrunde, ein Verfahren zum automatischen Parken eines Fahrzeugs anzugeben, bei dem die Zuweisung des Parkplatzes optimiert ist.

Zur Lösung dieser Aufgabe sind bei einem Verfahren der eingangs genannten Art die folgenden Schritte vorgesehen: Zurverfügungstellen wenigstens einer Umweltinformation für die Steuerungseinrichtung, Bewerten der Parkplätze anhand der wenigstens einen Umweltinformation, wobei ein Parkplatz als suboptimal bewertet wird, wenn die Sonnenstrahlung so stark ist, dass sie eine Aufheizung bewirkt, die einen festgelegten Grenzwert für die Fahrzeuginnentemperatur übersteigt, und Umparken eines sich auf einem als suboptimal bewerteten Parkplatz befindenden Fahrzeugs auf einen als optimal bewerteten Parkplatz durch die Steuerungseinrichtung.

Das erfindungsgemäße Verfahren unterscheidet sich von herkömmlichen Verfahren zum automatischen Parken dadurch, dass ein Fahrzeug nicht nur auf irgendeinem freien Parkplatz geparkt wird, stattdessen wird im Rahmen des Verfahrens geprüft, ob ein zugewiesener Parkplatz optimal ist oder ob ein besserer Parkplatz zur Verfügung steht. Dazu werden die Parkplätze anhand wenigstens einer Umweltinformation bewertet. Das Ergebnis dieser Bewertung ermöglicht einen Vergleich einer momentan zugewiesenen Parkfläche mit anderen Parkflächen. Sofern die momentane Parkfläche als suboptimal, das heißt schlechter als eine andere Parkfläche, bewertet wird, kann die Steuerungseinrichtung das Fahrzeug von dem suboptimalen Parkplatz auf einen optimalen Parkplatz umparken. Die Bewertung der zugewiesenen Parkplätze kann in festgelegten Zeitabständen, beispielsweise alle 15 oder 30 Minuten, stattfinden, sie kann auch von einer Umweltinformation oder einer Änderung einer Umweltinformation abhängig gemacht werden. Beispiele für derartige Umweltinformationen sind durch Sonnenstrahlung verursachte hohe Temperaturen oder eine drohende Beschädigung von Fahrzeugen durch Hagel. In beiden Fällen kann eine Verbesserung erzielt werden, die zu einer geringeren Fahrzeuginnentemperatur führt oder durch die Fahrzeugbeschädigungen durch Hagel vermieden werden können. Für den Benutzer ergibt sich auf diese Weise eine Steigerung des Komforts.

Der neue, optimierte Parkplatz stand möglicherweise ursprünglich, zu Beginn des Parkens noch nicht zur Verfügung. Der optimierte Parkplatz kann somit erst dadurch genutzt werden, dass zu einem späteren Zeitpunkt erneut nach einem besseren Parkplatz gesucht und dieser automatisiert angefahren wird. Selbst wenn das Fahrzeug zu Beginn, bezogen auf die damalige Situation, optimal geparkt war, kann der Fall eintreten, dass dieser erste Parkplatz aufgrund der im Zeitablauf veränderten Bedingungen später nicht mehr optimal ist, beispielsweise aufgrund einer Änderung der Richtung der Sonneneinstrahlung im Tagesverlauf.

Bei dem erfindungsgemäßen Verfahren kann es vorgesehen sein, dass wenigstens eine der folgenden Umweltinformationen bei der Bewertung der Parkplätze berücksichtigt wird: Intensität der Sonnenstrahlung, Richtung der Sonnenstrahlung, Einfallswinkel der Sonnenstrahlung, Lufttemperatur, Hagel.

Alternativ oder zusätzlich können weitere Umwelteinflüsse berücksichtigt werden wie Regen, Schnee, Frost und dergleichen. Die Steuerungseinrichtung kann Sensoren zur Erfassung dieser Umwelteinflüsse aufweisen, alternativ oder zusätzlich können diese Umweltinformationen der Steuerungseinrichtung über ein Kommunikationsnetzwerk übermittelt werden, beispielsweise über das Internet. Auf diese Weise kann auch der Eintritt bestimmter Umweltbedingungen prognostiziert werden, beispielsweise kann ein heranziehendes Gewitter, bei dem möglicherweise Hagel auftritt, vorhergesagt werden.

Erfindungsgemäß wird ein Parkplatz als suboptimal bewertet, wenn die Sonnenstrahlung so stark ist, dass sie eine Aufheizung bewirkt, die einen festgelegten Grenzwert für die Fahrzeuginnentemperatur übersteigt. Grundlage für die Bewertung kann somit auch die Differenz zwischen dem festgelegten Grenzwert und der aktuellen Fahrzeuginnentemperatur sein. Je mehr die aktuelle Fahrzeuginnentemperatur den Grenzwert übersteigt, desto suboptimaler ist der Parkplatz. Bei einem als suboptimal bewerteten Parkplatz veranlasst die Steuerungseinrichtung ein Umparken auf einen optimaleren Parkplatz, beispielsweise auf einen Parkplatz, der sich im Schatten befindet.

Eine besonders effiziente Verbesserung des erfindungsgemäßen Verfahrens ergibt sich, wenn das Umparken unter Berücksichtigung einer bekannten oder abgeschätzten Abholzeit erfolgt, indem das Fahrzeug zu einem festgelegten Zeitpunkt vor der Abholzeit umgeparkt wird. Erfindungsgemäß ist es daher möglich, dass der Benutzer beim Abstellen oder Abgeben des Fahrzeugs die voraussichtliche Abholzeit mitteilt. Es ist auch möglich, dass der Benutzer die Abholzeit nachträglich mitteilt oder ändert, beispielsweise über ein Mobiltelefon oder über das Internet. Somit kann der Benutzer z. B. die Information geben, dass er das Fahrzeug in 30 Minuten abholen möchte. In diesem Fall kann die Steuerungseinrichtung das Fahrzeug zu einem festgelegten Zeitpunkt vor der Abholzeit, beispielsweise 15 oder 30 Minuten vorher, umparken, damit während des verbleibenden Zeitraums bis zur Abholung eine Abkühlung des Fahrzeugs stattfinden kann.

Es ist auch möglich, dass das Umparken unter Berücksichtigung einer bekannten oder abgeschätzten Abholzeit erfolgt, wobei bei dem Fahrzeug zu einem festgelegten Zeitpunkt vor der Abholzeit und gegebenenfalls nach Optimierung der Parksituation durch Umparken des Fahrzeugs auf einen anderen Parkplatz eine Lüftungseinrichtung eingeschaltet wird. Um die gewünschte Abkühlung des Fahrzeuginnenraums zu erreichen, kann auch vorgesehen sein, dass bei eingeschalteter Lüftungseinrichtung ein oder mehrere Fenster des Kraftfahrzeugs geöffnet werden, so dass der Fahrzeuginnenraum durch kühlere Außenluft gekühlt wird. Alternativ oder zusätzlich zu der Lüftungseinrichtung kann gegebenenfalls auch eine Klimaanlage eingeschaltet werden.

Zum Vermeiden einer Beschädigung eines Fahrzeugs kann es bei dem erfindungsgemäßen Verfahren vorgesehen sein, dass ein auf einem ungeschützten Parkplatz geparktes Fahrzeug bei vorhergesagtem oder stattfindendem Hagel auf einen überdachten Parkplatz umgeparkt wird. Diese Vorgehensweise bietet sich insbesondere bei Parkhäusern an, bei denen auch eine unbedachte oberste Ebene genutzt wird. Bei drohendem Hagel können die Fahrzeuge von der Steuerungseinrichtung rechtzeitig auf überdachte, geschützte Parkplätze umgeparkt werden, wodurch eine Beschädigung sicher vermieden werden kann.

Da das erfindungsgemäße Verfahren eine Komfortsteigerung für den Benutzer bewirkt, kann für das Umparken auf einen optimalen Parkplatz eine Gebühr berechnet werden.

Daneben betrifft die Erfindung eine Steuerungseinrichtung die zur Durchführung des beschriebenen Verfahrens geeignet ist.

Die Erfindung wird nachfolgend anhand von Ausführungsbeispielen unter Bezugnahme auf die Zeichnungen erläutert. Die Zeichnungen sind schematische Darstellungen und zeigen:
- Fig. 1: eine Parkfläche, auf der das erfindungsgemäße Verfahren durchgeführt wird;
- Fig. 2: die in Fig. 1 gezeigte Parkfläche zu einem späteren Zeitpunkt im Vergleich zu Fig. 1;
- Fig. 3: ein Parkhaus, bei dem das erfindungsgemäße Verfahren durchgeführt wird; und
- Fig. 4: das in Fig. 3 gezeigte Parkhaus zu einem späteren Zeitpunkt im Vergleich zu Fig. 3.

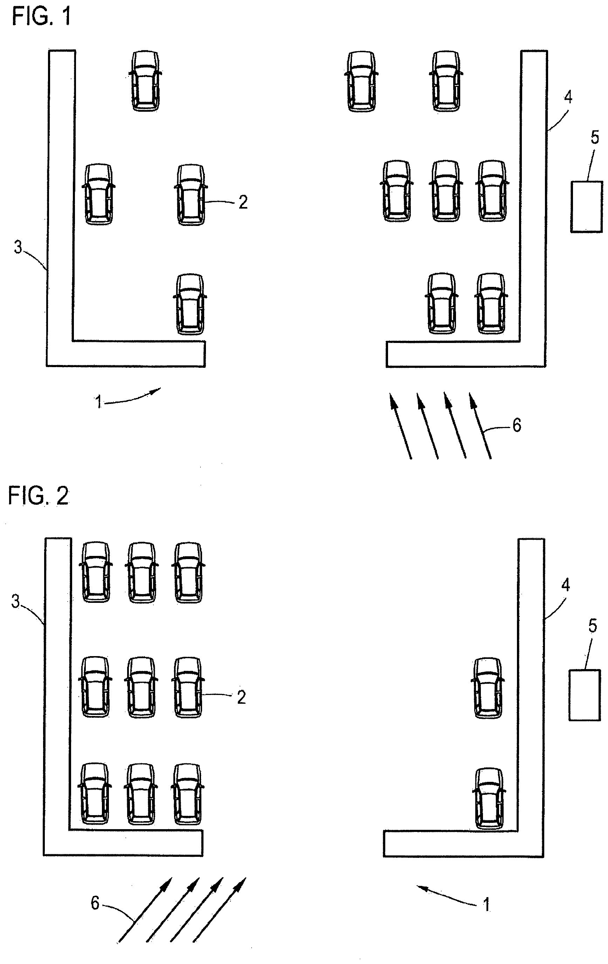

Fig. 1 ist eine schematische Draufsicht und zeigt eine Parkfläche 1 mit einer Vielzahl von Parkplätzen, die teilweise mit Fahrzeugen 2 belegt sind. In der Draufsicht von Fig. 1 erkennt man, dass die Parkfläche 1 an mehreren Seiten durch schematisch dargestellte Wände oder Mauern 3, 4 begrenzt wird. Eine Steuerungseinrichtung 5 ist dafür vorgesehen, einem Fahrzeug 2 einen bestimmten Parkplatz zuzuweisen. Ein Benutzer fährt sein Fahrzeug bis zu einer Übergabestellte, von da an übernimmt die Steuerungseinrichtung 5 das Fahrzeug. Dem Fahrzeug wird ein bestimmter Parkplatz zugewiesen und die Steuerungseinrichtung steuert das Fahrzeug 2 bis zu dem bestimmten Parkplatz, wo es geparkt wird. Wenn der Benutzer das Fahrzeug abgibt, kann er den Abholzeitpunkt angeben.

Die in Fig. 1 gezeigte Parkfläche 1 befindet sich im Freien. Ein Pfeil 6 zeigt die Richtung der Sonnenstrahlung an. Die in Fig. 1 gezeigte Richtung des Pfeils 6 entspricht der Situation am Vormittag. Zu diesem Zeitpunkt befinden sich einige Fahrzeuge im Schatten der Mauer 4. Die Richtung der Sonnenstrahlung wird von der Steuerungseinrichtung 5 als Umweltinformation berücksichtigt. Daneben werden weitere Umweltinformationen berücksichtigt wie die Lufttemperatur und ein gegebenenfalls vorhergesagtes Unwetter, bei dem z. B. Hagel auftreten kann.

Die einzelnen Parkplätze werden anhand der Umweltinformation, das heißt durch Berücksichtigung der Richtung der Sonnenstrahlung bewertet. Diejenigen Parkplätze, die sich aufgrund der Mauer 4 im Schatten befinden, werden als optimal bewertet, diejenigen Parkplätze, die sich in der Sonne befinden, werden als suboptimal bewertet. Den einzelnen Parkplätzen kann in Abhängigkeit der einfallenden Sonnenstrahlung auch ein numerischer Wert zugewiesen werden. Diese von der Steuerungseinrichtung 5 vorgenommene Bewertung wird in regelmäßigen Abständen wiederholt, in dem dargestellten Ausführungsbeispiel nach jeweils 30 Minuten. Im Laufe des Tages verändert sich die Richtung der Sonnenstrahlung, wie in Fig. 2 dargestellt ist. Zu diesem Zeitpunkt fällt die Sonnenstrahlung aus der durch den Pfeil 6 angegebenen Richtung ein. Dementsprechend wären Fahrzeuge, die sich neben der Mauer 4 befinden, vollständig der Sonnenstrahlung ausgesetzt. Da die Sonnenstrahlung eine starke Aufheizung des Fahrzeuginnenraums bewirkt, die unerwünscht ist, werden Fahrzeuge, deren Parkplatz als suboptimal und damit nachteilig bewertet worden ist, von der Steuerungseinrichtung 5 gesteuert umgeparkt. In Fig. 2 erkennt man, dass die meisten Fahrzeuge so geparkt worden sind, dass sie sich im Schatten der Mauer 3 befinden.

Üblicherweise ist jedoch die Anzahl "optimaler" Parkplätze, die sich im Schatten befinden, begrenzt, so dass nicht sämtliche geparkten Fahrzeuge im Schatten geparkt werden können. Die Steuerungseinrichtung 5 steuert daher das Umparken unter Berücksichtigung der voraussichtlichen Abholzeit so, dass Fahrzeuge zu einem festgelegten Zeitpunkt vor der Abholzeit, in diesem Zeit 30 Minuten vorher, auf einen im Schatten liegenden Parkplatz umgeparkt werden. Zusätzlich werden dann die Fenster des Fahrzeugs geöffnet, so dass der Innenraum durch kühle Luft abgekühlt werden kann, der Abkühlvorgang wird zusätzlich durch Einschalten der Lüftungseinrichtung des jeweiligen Fahrzeugs unterstützt.

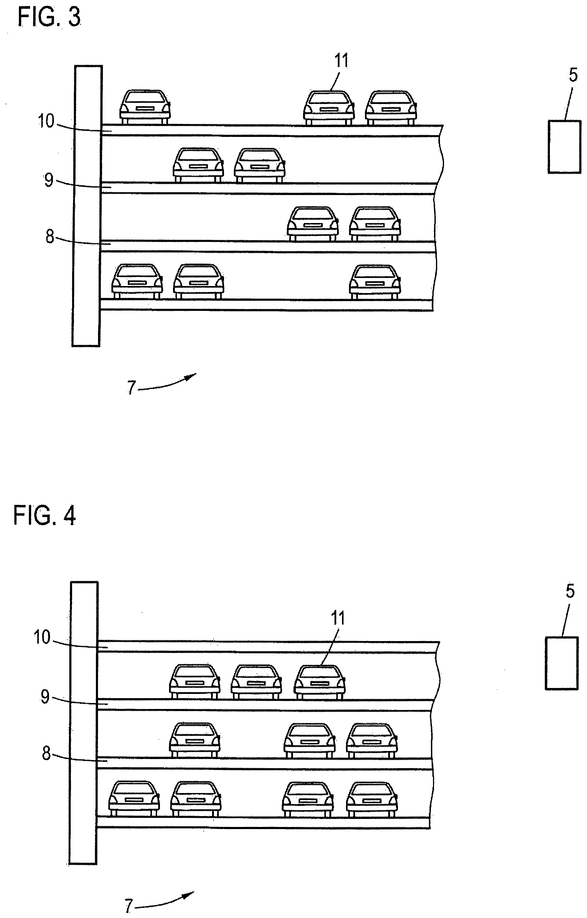

Die Figuren 3 und 4 zeigen ein zweites Ausführungsbeispiel des erfindungsgemäßen Verfahrens. Fig. 3 zeigt ein Parkhaus 7 mit mehreren Ebenen 8, 9, 10, wobei die oberste Ebene 10 unter freiem Himmel ist. Der Steuerungseinrichtung 5 werden Umweltinformationen über eine Internetverbindung zugeführt. In dem Fall, wenn ein Unwetter mit Hagel vorhergesagt worden ist, werden die Parkplätze der obersten Ebene 10 als suboptimal bewertet, da der Hagel eine Beschädigung der Fahrzeuge 11 hervorrufen könnte. In dieser Situation wird von der Steuerungseinrichtung 5 das Umparken der auf der obersten Ebene 10 geparkten Fahrzeuge 11 auf eine andere Ebene veranlasst.

Fig. 4 zeigt das Parkhaus 7 nach dem erfolgten Umparkvorgang. Die Fahrzeuge 11 der obersten Ebene 10 sind von der Steuerungseinrichtung 5 auf freie Parkplätze der Ebenen 8, 9 und weiterer unterer Ebenen umgeparkt worden, die im Vergleich zu einem Parkplatz auf der obersten Ebene 10 als optimal bewertet worden sind. Durch das Umparken der Fahrzeuge 11 von einem ungeschützten Parkplatz auf einen überdachten Parkplatz können Hagelschäden vermieden werden.

## Patentansprüche

1. Verfahren zum automatischen Parken eines Fahrzeugs auf einer eine Vielzahl von Parkplätzen aufweisenden Parkfläche, mit den folgenden Schritten:
- Zuweisen eines bestimmten Parkplatzes für das Kraftfahrzeug durch die Steuerungseinrichtung;
- automatisches oder von der Steuerungseinrichtung gesteuertes Fahren des Fahrzeugs zu dem bestimmten Parkplatz;
**gekennzeichnet durch** die folgenden Schritte:
- Zurverfügungstellen wenigstens einer Umweltinformation für die Steuerungseinrichtung; **gekennzeichnet durch** die weiteren folgenden Schritte:
- Bewerten der Parkplätze anhand der wenigstens einen Umweltinformation; wobei ein Parkplatz als suboptimal bewertet wird, wenn die Sonnenstrahlung so stark ist, dass sie eine Aufheizung bewirkt, die einen festgelegten Grenzwert für die Fahrzeuginnentemperatur übersteigt, und
- Umparken eines sich auf einem als suboptimal bewerteten Parkplatz befindenden Fahrzeugs auf einen als optimal bewerteten Parkplatz durch die Steuerungseinrichtung.

2. Verfahren nach Anspruch 1,
**dadurch gekennzeichnet,**
**dass** wenigstens eine der folgenden Umweltinformationen bei der Bewertung der Parkplätze berücksichtigt wird: Intensität der Sonnenstrahlung, Richtung der Sonnenstrahlung, Einfallswinkel der Sonnenstrahlung, Lufttemperatur, Hagel.

3. Verfahren nach Anspruch 1 oder 2,
**dadurch gekennzeichnet,**
**dass** das Umparken unter Berücksichtigung einer bekannten oder abgeschätzten Abholzeit erfolgt, wobei das Fahrzeug an einem festgelegten Zeitpunkt vor der Abholzeit umgeparkt wird.

4. Verfahren nach einem der vorangehenden Ansprüche,
**dadurch gekennzeichnet,**
**dass** das Umparken unter Berücksichtigung einer bekannten oder abgeschätzten Abholzeit erfolgt, wobei bei dem Fahrzeug zu einem festgelegten Zeitpunkt vor der Abholzeit eine Lüftungseinrichtung eingeschaltet wird.

5. Verfahren nach einem der vorangehenden Ansprüche,
**dadurch gekennzeichnet,**
**dass** ein auf einem ungeschützten Parkplatz geparktes Fahrzeug bei vorhergesagtem oder stattfindendem Hagel auf einen überdachten Parkplatz umgeparkt wird.

6. Verfahren nach einem der vorangehenden Ansprüche,
**dadurch gekennzeichnet,**
**dass** für das Umparken auf einen optimalen Parkplatz eine Gebühr berechnet wird.

7. Steuerungseinrichtung, die zur Durchführung eines Verfahrens nach einem der Ansprüche 1 bis 6 ausgebildet ist.

## Claims

1. Method for automatically parking a vehicle in a parking area having a plurality of parking spaces, with the following steps:
- allocating a specific parking space for the motor vehicle by the control device;
- automatic driving, or driving under the control of the control device, of the vehicle to the specific parking space;
**characterised by** the following steps:
- providing at least one item of environmental information for the control device;
**characterised by** the following further steps:
- evaluating the parking spaces on the basis of the at least one item of environmental information, wherein a parking space is evaluated as being suboptimal if the solar radiation is so strong that it causes a heating which exceeds a defined threshold for the internal temperature of the vehicle, and
- re-parking a vehicle located in a parking space which is evaluated as being suboptimal to a parking space which is evaluated as being optimal by the control device.

2. Method according to claim 1,
**characterised in that**
at least one of the following items of environmental information is taken into account when evaluating the parking spaces: intensity of the solar radiation, direction of the solar radiation, angle of incidence of the solar radiation, air temperature, hail.

3. Method according to claim 1 or 2,
**characterised in that**
re-parking is carried out taking into account a known or estimated pick-up time, wherein the vehicle is re-parked at a specified time before the pick-up time.

4. Method according to any of the preceding claims,
**characterised in that**
re-parking is carried out taking into account a known or estimated pick-up time, wherein a ventilation device is switched on in the vehicle at a specified time before the pick-up time.

5. Method according to any of the preceding claims,
**characterised in that**
a vehicle parked in an unprotected parking space is re-parked in a covered parking space in the event of predicted hail or hail.

6. Method according to any of the preceding claims,
**characterised in that**
a fee is charged for re-parking to a parking space which is evaluated as optimal.

7. Control device which is configured to carry out a method according to any of claims 1 to 6.

## Revendications

1. Procédé de stationnement automatique d'un véhicule sur une aire de stationnement comprenant une pluralité de places de stationnement, avec les étapes suivantes :
- l'attribution d'une place de stationnement définie pour le véhicule automobile par l'équipement de commande ;
- le déplacement, automatique ou commandé par l'équipement de commande, du véhiculé à la place de stationnement définie ;
**caractérisé par** les étapes suivantes :
- la mise à disposition d'au moins une information d'environnement pour l'équipement de commande ;
**caractérisé par** les autres étapes suivantes :
- l'évaluation des places de stationnement à l'aide de l'au moins une information d'environnement; dans lequel une place de stationnement est évaluée en tant que non optimale si le rayonnement solaire est si fort qu'il provoque une élévation de température qui dépasse une valeur limite déterminée pour la température à l'intérieur d'un véhicule, et
- le restationnement d'un véhicule, se trouvant sur une place de stationnement évaluée en tant que non optimale, à une place de stationnement évaluée comme optimale, par l'équipement de commande.

2. Procédé selon la revendication 1,
**caractérisé en ce que**
au moins une des informations d'environnement suivantes est prise en compte lors de l'évaluation des places de stationnement : intensité du rayonnement solaire, direction du rayonnement solaire, angle d'incidence du rayonnement solaire, température de l'air, grêle.

3. Procédé selon la revendication 1 ou 2,
**caractérisé en ce que**
le restationnement est effectué avec une prise en compte d'un temps d'enlèvement connu ou estimé, dans lequel le restationnement du véhicule est effectué à un instant déterminé avant le temps d'enlèvement.

4. Procédé selon l'une quelconque des revendications précédentes,
**caractérisé en ce que**
le restationnement est effectué avec une prise en compte d'un temps d'enlèvement connu ou estimé, dans lequel un dispositif d'aération est mis en marche au niveau du véhicule à un instant déterminé avant le temps d'enlèvement.

5. Procédé selon l'une quelconque des revendications précédentes,
**caractérisé en ce que**
un véhicule stationné sur une place de stationnement non protégée est restationné en cas de grêle prévue ou ayant lieu à une place de stationnement couverte.

6. Procédé selon l'une quelconque des revendications précédentes,
**caractérisé en ce que**
une taxe est calculée pour le restationnement à une place de stationnement optimale.

7. Équipement de commande qui est conçu pour l'exécution d'un procédé selon l'une quelconque des revendications 1 à 6.
